# EUROPÄISCHE PATENTSCHRIFT

(11) **EP 0 924 535 B1**
(45) Veröffentlichungstag und Bekanntmachung des Hinweises auf die Patenterteilung: **16.02.2005**
(21) Anmeldenummer: 98124137.5
(22) Anmeldetag: 18.12.1998
(51) Int. Cl.: G01S 17/02, G01S 7/481

(54) **Opto-elektronischer Sensor**
Opto-electronic sensor
Capteur opto-électronique

(30) Priorität: 18.12.1997 DE 19756541
(43) Veröffentlichungstag der Anmeldung: 23.06.1999
(73) Patentinhaber: Sick AG, 79183 Waldkirch, Breisgau (DE)
(72) Erfinder: Ringwald, Siegfried, 79215 Elzach (DE)
(74) Vertreter: Finsterwald, Martin, Dr.

(56) Entgegenhaltungen:
- EP-A- 0 635 729
- EP-A- 0 665 522

## Beschreibung

Die Erfindung betrifft einen opto-elektronischen Sensor zur Überwachung eines Raumbereichs, insbesondere einen Reflexionslichttaster, mit einem Sender zum Aussenden eines Sendelichtstrahls entlang einer Sendeachse, mit einer Empfangsoptik und mit einem Empfangselement. Ein solcher Sensor ist aus EP-A-0 635 729 bekannt.

Solche Sensoren dienen zum Detektieren diffus reflektierender oder remittierender Objekte in einem einen Abschnitt des Sendelichtstrahls umgebenden Überwachungsbereich. Falls ein im Überwachungsbereich befindliches Objekt einen Teil des Sendelichts in Richtung der Empfangsoptik reflektiert, wird dieser zum Empfangselement gelenkt, so daß dieses ein entsprechendes Empfangssignal erzeugt.

Nachteilig an bekannten derartigen Sensoren ist die räumliche Begrenzung ihres Überwachungsbereichs: Entsprechend den Abbildungseigenschaften der Empfangsoptik werden Objekte lediglich entlang eines eingeschränkten Bereichs der Sendeachse erkannt. Bei Sensoren mit Pupillenteilung ergibt sich das Problem, daß das von nahe am Sensor auf der Sendeachse angeordneten Objekten reflektierte oder remittierte Licht das Empfangselement nicht mehr erreicht.

Es ist eine Aufgabe der Erfindung, einen Sensor der eingangs genannten Art zu schaffen, der bei einfacher baulicher Ausgestaltung eine Erweiterung des Überwachungsbereichs in Richtung der Empfangsoptik ermöglicht.

Erfindungsgemäß wird die Aufgabe dadurch gelöst, daß die Empfangsoptik zur Vergrößerung des Überwachungsbereichs eine Multifokuslinse mit mehreren Zonen unterschiedlicher Brennpunkte aufweist, wobei diejenige Zone, die für die Abbildung eines Überwachungs-Nahbereichs auf das Empfangselement wirksam ist, einen geringeren Abstand zu der Sendeachse aufweist als diejenige Zone, die für die Abbildung eines Überwachungs-Fernbereichs auf das Empfangselement wirksam ist, und wobei die Multifokuslinse asymmetrisch ist.

Indem eine Zone der Multifokuslinse für einen Abschnitt des Überwachungsbereichs wirksam ist, wird das Licht, das von einem in diesem Abschnitt befindlichen Objekt reflektiert oder remittiert wird und die Zone beaufschlagt, von dieser zumindest größtenteils auf das Empfangselement umgelenkt.

Die erfindungsgemäße asymmetrische Multifokuslinse besitzt insbesondere keine Rotationssymmetrie bezüglich der Sendeachse sowie keine Spiegelsymmetrie bezüglich einer Ebene, welche senkrecht auf der Sendeachse steht. Hingegen gilt noch eine solche Multifokuslinse als erfindungsgemäß, welche spiegelsymmetrisch ist bezüglich einer Ebene, die parallel zu der Sendeachse verläuft oder diese enthält.

Durch die erfindungsgemäße Ausgestaltung der Empfangsoptik mit mehreren, räumlich voneinander getrennten Brennpunkten wird der Überwachungsbereich wirksam erweitert. Durch den asymmetrischen Aufbau der Multifokuslinse läßt sich die Ausgestaltung mit Zonen unterschiedlicher Brennpunkte im Gegensatz zu beispielsweise rotationssymmetrischen Multifokuslinsen besonders einfach realisieren.

Indem die für die Abbildung eines Überwachungs-Nahbereichs wirksame Zone der Multifokuslinse einen vergleichsweise geringen Abstand zu der Sendeachse aufweist, kann der Überwachungsbereich vorteilhaft besonders wirksam in Richtung des Sensors erweitert werden. Das Licht fällt von dem reflektierenden Objekt nämlich in einem geringen Winkel relativ zur Sendeachse auf diese Zone, so daß bei variierendem Abstand des Objekts eine starke Veränderung des Umlenkungswinkels und somit eine Verringerung der das Empfangselement beaufschlagenden Lichtmenge wirksam vermindert wird. Durch den asymmetrischen Aufbau der Multifokuslinse läßt sich ein geringer Abstand zwischen dem Sendestrahl und der für die Abbildung eines Überwachungs-Nahbereichs wirksamen Zone zur Unterdrückung des Effekts der verringerten Lichtbeaufschlagung auf besonders einfache Weise realisieren.

Der erfindungsgemäße Sensor wird in Pupillenteilung aufgebaut, also mit voneinander verschiedener Sende- und Empfangsachse, unter Wahrnehmung der mit diesem Aufbau einhergehenden Vorteile, wie beispielsweise dem Ausschließen optischen Übersprechens durch interne Reflexionen und/oder durch Rückstreuungen, die durch Verschmutzung an den optischen Grenzflächen verursacht sind. Im Vergleich mit bekannten Sensoren in Pupillenteilung besitzt der erfindungsgemäße Sensor den Vorteil einer insbesondere in Richtung der Empfangsoptik erfolgten Erweiterung des Überwachungsbereichs.

Die Erfindung ermöglicht es ferner, die Zonen der Multifokuslinse bzw. deren Brennpunkte derart vorzusehen, daß räumlich im wesentlichen voneinander beabstandete Abschnitte des Überwachungsbereichs entstehen.

In einer bevorzugten Ausführungsform der Erfindung ist die Multifokuslinse einstückig ausgebildet. Vorzugsweise besteht sie aus einem einzigen, im wesentlichen homogenen Material. Eine derartige Ausgestaltung der Multifokuslinse ermöglicht eine besonders einfache Herstellung und Handhabung derselben.

Insbesondere kann die Multifokuslinse aus einem Material von homogenem Brechungsindex gefertigt sein, wobei die verschiedenen Zonen mit ihren durch die jeweilige Oberflächengestaltung und Dicke realisierten unterschiedlichen Abbildungseigenschaften im wesentlichen deutlich von einander abgegrenzt sind.

Alternativ hierzu ist es möglich, die Multifokuslinse als Verlaufslinse auszubilden. In diesem Fall findet ein kontinuierlicher Übergang der Abbildungseigenschaften von einer Zone zur anderen Zone statt.

Wenn der Sender in einem nicht sichtbaren Wellenlängenbereich sendet, beispielsweise im Infraroten, ist es bevorzugt, wenn der erfindungsgemäße Sensor einen Pilotsender besitzt, beispielsweise eine rote LED, zum Aussenden eines sichtbaren Pilotlichtstrahls im wesentlichen parallel zu der Sendeachse des Senders. Dadurch kann der Sensor bzw. dessen Überwachungsbereich auf einfache Weise justiert werden. Die erfindungsgemäße Ausgestaltung des Sensors mit einer asymmetrischen Multifokuslinse erleichtert die Integration eines derartigen Pilotsenders in den Sensor, wobei der Pilotlichtstrahl mit einfachsten optischen Mitteln sehr nahe an der Sendeachse geführt werden kann.

In einer weiteren bevorzugten Ausführungsform besitzt der Sensor eine Meßeinrichtung, beispielsweise eine Lichtlaufzeit-Meßeinrichtung, zur Bestimmung des Abstands eines Objekts innerhalb des Überwachungsbereichs vom Sensor.

Weitere bevorzugte Ausführungsformen der Erfindung, insbesondere mögliche Ausgestaltungen der Multifokuslinse, sind in den Unteransprüchen beschrieben.

Die Erfindung wird nachfolgend anhand von Ausführungsbeispielen unter Bezugnahme auf die Zeichnungen beschrieben; in diesen zeigen:
- Fig. 1: eine perspektivische Seitenansicht von Teilen eines erfindungsgemäßen Sensors,
- Fig. 2a und 2b: perspektivische Ansichten der Lichtaustrittsseite bzw. Lichteintrittsseite der Multifokuslinse des Sensors gemäß Fig. 1,
- Fig. 2c: eine Ansicht der Unterseite der Multifokuslinse des Sensors gemäß Fig. 1,
- Fig. 3a und 3b: eine schematische Seitenansicht bzw. Draufsicht des optischen Systems des Sensors gemäß Fig. 1 mit einem Objekt in einem Überwachungs-Fernbereich,
- Fig. 4a und 4b: eine schematische Seitenansicht bzw. Draufsicht des optischen Systems des Sensors gemäß Fig. 1 mit einem Objekt in einem Überwachungs-Nahbereich,
- Fig. 5a und 5b: eine schematische Seitenansicht bzw. Draufsicht des optischen Systems des Sensors gemäß Fig. 1 mit einem Objekt in einem Überwachungs-Extremnahbereich, und
- Fig. 6: ein Schaubild des Verlaufs der Lichtmenge, die bei einem erfindungsgemäßen Sensor von einem Objekt reflektiert oder remittiert und am Empfangselement erhalten wird, in Abhängigkeit vom Abstand dieses Objekts.

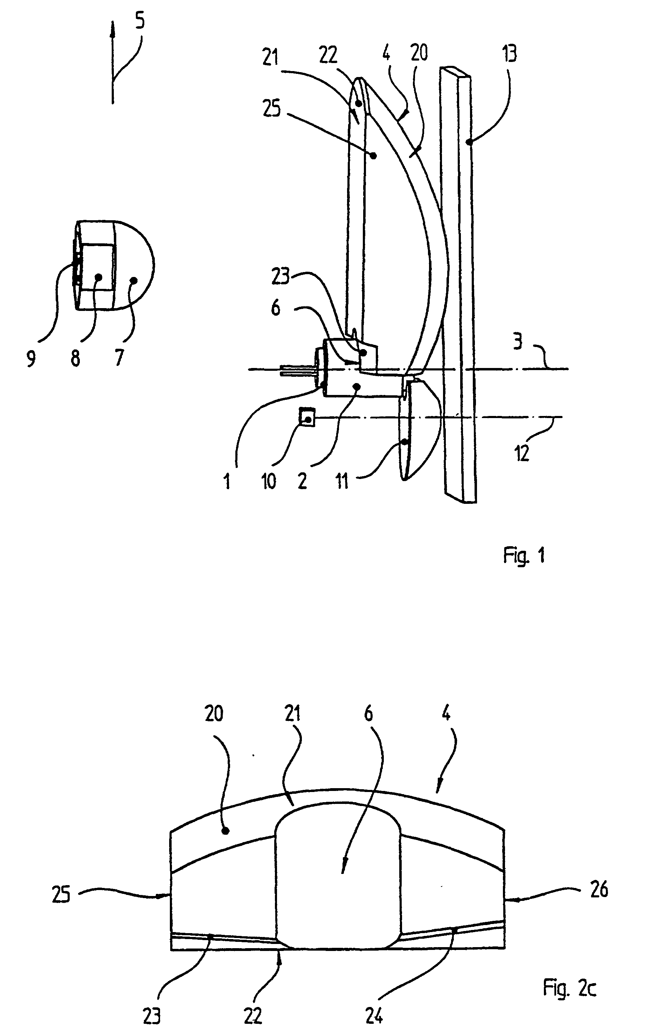

Fig. 1 zeigt schematisch eine perspektivische Seitenansicht von Teilen eines erfindungsgemäßen Sensors. Der Sensor besitzt eine Infrarot-Laserdiode als Sender 1 mit aufgesetzter Kollimatorlinseneinheit 2 zum Aussenden eines Sendelichtstrahls entlang einer Sendeachse 3.

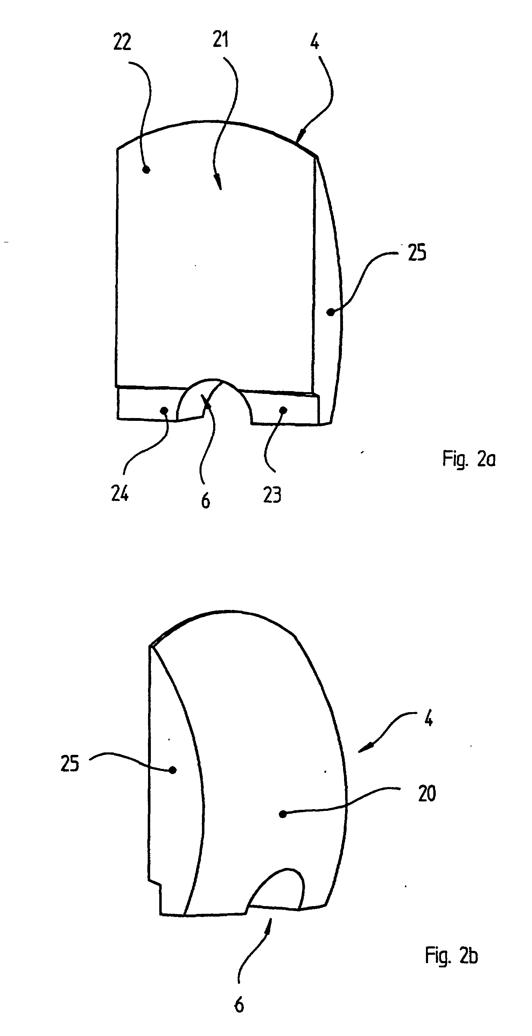

Eine asymmetrisch geformte Empfangs-Multifokuslinse 4, die im wesentlichen eine in Fig. 1 vertikal nach oben weisende Haupterstreckungsrichtung 5 aufweist, besitzt an ihrem der Sendeachse 3 zugewandten Ende eine halbzylinderförmige Aussparung 6. Entlang dieser Aussparung 6 umgreift die Multifokuslinse 4 die Kollimatorlinseneinheit 2 dergestalt, daß ihre Haupterstreckungsrichtung 5 im wesentlichen senkrecht steht zu der Sendeachse 3. Die genaue bauliche Ausgestaltung der Multifokuslinse 4 wird nachfolgend anhand der Figuren 2a bis 2c näher erläutert.

Bezüglich der Senderichtung des Senders 1 von der Multifokuslinse 4 zurückversetzt befindet sich eine halbkugelförmige Empfangssammellinse 7, an deren Rückseite ein von einem zylinderförmigen Linsenfortsatz 8 umgebenes Empfangselement 9 angeordnet ist.

Desweiteren ist an der der Multifokuslinse 4 gegenüberliegenden Seite des Senders 1 eine Pilotsender-Leuchtdiode 10 mit einer Pilotstrahllinse 11 angeordnet zum Aussenden eines Pilotlichtstrahls entlang einer Pilotstrahlsendeachse 12, die im wesentlichen parallel zur Sendeachse 3 verläuft. In Senderichtung der Pilotstrahllinse 11 und der Multifokuslinse 4 befindet sich eine flächige Schutzscheibe 13.

Die vorstehend beschriebenen Bestandteile des Sensors sind durch in Fig. 1 nicht dargestellte Mittel in ihrer Lage relativ zueinander innerhalb eines Gehäuses fixiert, dessen Frontseite teilweise durch die Schutzscheibe 13 gebildet ist.

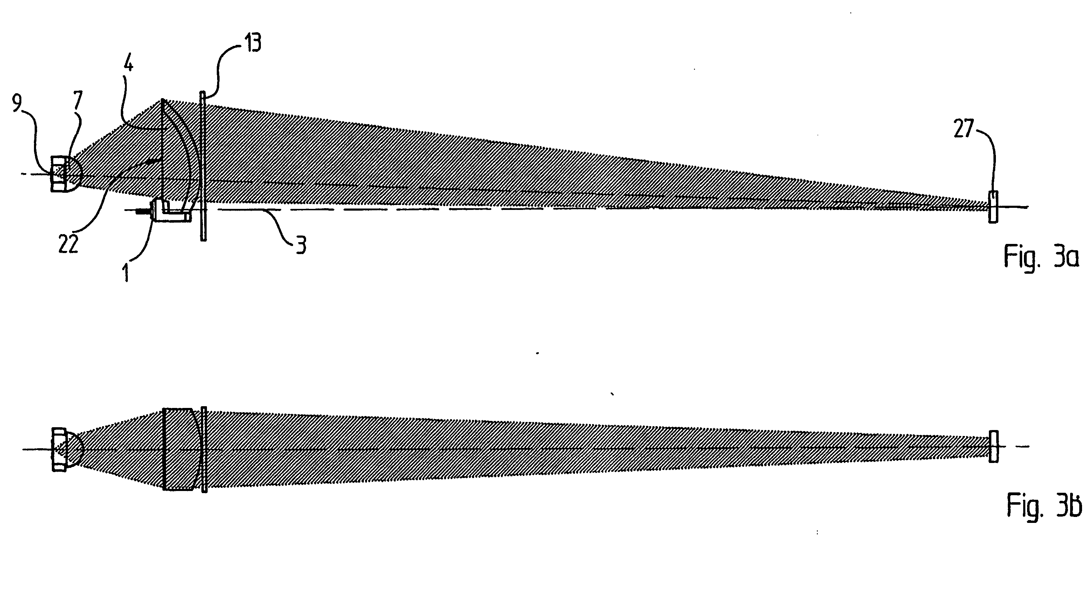

Der in Fig. 1 dargestellte Sensor dient als Reflexionslichttaster zum Detektieren von Objekten innerhalb eines Überwachungsbereichs, der sich im wesentlichen mit einer durch die Abbildung des Sendelichtstrahls durch die Kollimatorlinseneinheit 2 vorgegebenen seitlichen Ausdehnung entlang der Sendeachse 3 erstreckt. Falls ein Objekt von dem Licht des Senders 1 erfaßt wird, reflektiert es dieses diffus auch in Richtung der Multifokuslinse 4. Durch deren verschiedene Zonen wird das reflektierte Licht in Abhängigkeit vom Abstand des Objekts vom Sensor jeweils auf die Empfangssammellinse 7 und von dieser auf das Empfangselement 9 umgelenkt. Dieses erzeugt in Abhängigkeit von der empfangenen Lichtintensität ein Ausgangssignal, das beispielsweise zum Vergleich mit einem Schwellwert an eine in Fig. 1 nicht dargestellte Auswerteeinheit weitergeleitet werden kann. Die Wirkungsweise der verschiedenen Zonen der Multifokuslinse 4 wird nachfolgend anhand der Figuren 3a bis 5b erläutert.

Die Empfangssammellinse 7 besitzt eine kurze Brennweite und ist unmittelbar vor dem Empfangselement 9 angeordnet. Ihre halbkugelförmige Lichteintrittsseite weist eine Öffnungsfläche auf, die wesentlich größer ist als die lichtempfindliche Fläche des Empfangselements 9, beispielsweise um einen Faktor 10 bis 100. Dadurch wird die Größe der photoempfindlichen Fläche virtuell erhöht bzw. kann die lichtempfindliche Fläche des Empfangselements 9 zur Erzielung eines geringen elektronischen Rauschens reell gering gehalten werden. Außerdem ermöglicht die Empfangssammellinse 7 die Kompensation von Justagefehlern zwischen der Sendeachse 3 und den optischen Achsen der Lichtaustrittsseiten 22, 23, 24 der verschiedenen Zonen der Multifokuslinse 4 bis zu ± 3°, und sie erlaubt somit eine einfachere und schnellere Montage des Sensors. Durch die Verwendung der Empfangssammellinse 7 läßt sich ferner eine geringere Bautiefe des Sensors erreichen.

Der Pilotsender 10, 11 sendet einen sichtbaren Pilotlichtstrahl entlang der Achse 12 aus, der das Justieren des Senders 1 und somit des Sensors vereinfacht.

Die Figuren 2a, 2b und 2c zeigen perspektivische Seitenansichten bzw. eine Ansicht der Unterseite der Multifokuslinse 4 des Sensors gemäß Fig. 1. Die Multifokuslinse 4 besitzt eine Lichteintrittsseite 20 mit einer einzigen asphärischen Oberfläche. Eine der Lichteintrittsseite 20 gegenüberliegende Lichtaustrittsseite 21 der Multifokuslinse 4 weist drei Planflächen 22, 23, 24 auf, welche jeweils einer für die Abbildung eines bestimmten Abschnitts des Überwachungsbereichs wirksamen Zone zugeordnet sind.

Die Planfläche 22 der für die Abbildung eines Überwachungs-Fernbereichs wirksamen Zone nimmt den überwiegenden Teil der Lichtaustrittsseite 21 ein. Diese Fern-Planfläche 22 erstreckt sich innerhalb einer Ebene im wesentlichen senkrecht zu der Sendeachse 3 ungefähr bis auf die Höhe der Aussparung 6. An diesem Ende der Planfläche 22 schließen sich die beiden Planflächen 23, 24 an, welche diejenigen Zonen der Multifokuslinse 4 seitlich begrenzen, die für die Abbildung eines Überwachungs-Nahbereichs bzw. -Extremnahbereichs wirksam sind.

Die beiden Planflächen 23, 24 erstrecken sich im wesentlichen jeweils an einer Seite der Aussparung 6 von dem Ende der Fern-Planfläche 22 entgegen der Haupterstreckungsrichtung 5 bis auf die Höhe der Sendeachse 3. Die Flächennormale der Nah-Planfläche 23 steht in einem Winkel von etwa 91° zu der Haupterstreckungsrichtung 5 und schließt mit der Sendeachse 3 einen Winkel von ungefähr 5° ein. Die Flächennormale der Ertremnah-Planfläche 24 schließt mit der Haupterstreckungsrichtung 5 einen Winkel von etwa 91,5° und mit der Sendeachse 3 einen Winkel von ungefähr 11° ein. Die jeweils der Fern-Planfläche 22 benachbarte Kante der Nah-Planfläche 23 und der Extremnah-Planfläche 24 ist in Richtung der Lichteintrittsseite 20 der Multifokuslinse 4 zurückversetzt.

Die drei Planflächen 22, 23, 24 sind seitlich jeweils durch eine parallel sowohl zu der Sendeachse 3 als auch der Haupterstreckungsrichtung 5 verlaufende plane Seitenfläche 25 bzw. 26 begrenzt.

Fig. 2c zeigt die Unterseite der Multifokuslinse 4 in einer Ansicht in Haupterstreckungsrichtung 5. Die Unterseite der für die Abbildung eines Nahbereichs bzw. eines Extremnahbereichs wirksamen Zone besitzt jeweils ungefähr den Umriß eines Trapezes, dessen an die Lichteintrittsseite 20 der Multifokuslinse 4 angrenzende Seite gekrümmt ist entsprechend dem asphärischen Verlauf der Oberfläche 20. In der Ansicht gemäß Fig. 2c ist auch die Verkippung der Nah- und Extremnah-Planfläche 23 bzw. 24 bezüglich der Haupterstreckungsrichtung 5 zu erkennen. Die Neigungen der Planflächen 23, 24 bezüglich der Sendeachse 3 bzw. der Haupterstreckungsrichtung 5 können auch anders gewählt sein, je nach den gewünschten Abbildungseigenschaften der entsprechenden Zonen.

Die Figuren 3a und 3b, 4a und 4b, sowie 5a und 5b zeigen jeweils in schematisierter Seitenansicht bzw. Draufsicht das optische System des Sensors gemäß der Fig. 1 und illustrieren durch die eingezeichnete Schraffur die Abbildung von reflektiertem oder remittiertem Licht eines Objekts 27, das sich jeweils in großer Entfernung vom Sensor bzw. nahe dem Sensor bzw. in unmittelbarer Nähe des Sensors befindet, auf das Empfangselement 9 des Sensors mittels der jeweils wirksamen Zone der Multifokuslinse 4.

In der Darstellung gemäß den Figuren 3a und 3b befindet sich das Objekt 27 in einem Überwachungs-Fernbereich. Die für die Abbildung dieses Objekts 27 auf die Empfangssammellinse 7 bzw. das Empfangselement 9 wirksame Zone der Multifokuslinse 4 umfaßt insbesondere denjenigen Bereich der Multifokuslinse 4, der sich von der Planfläche 22 an der Lichtaustrittsseite 21 in Richtung der Sendeachse 3 bis zu der Lichteintrittsseite 20 der Multifokuslinse 4 erstreckt.

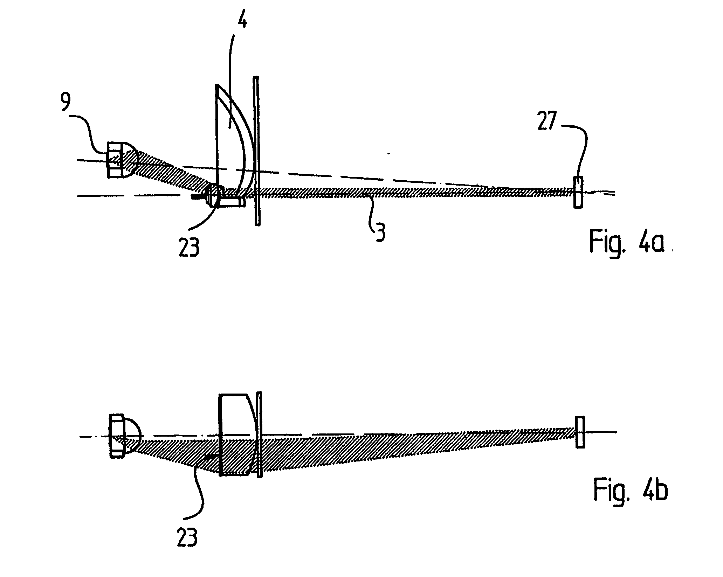

Wie aus den Figuren 4a und 4b hervorgeht, ist die für die Abbildung eines in einem Überwachungs-Nahbereich befindlichen Objekts 27 wirksame Zone der Multifokuslinse 4 durch denjenigen Bereich gebildet, der sich von der Planfläche 23 parallel zu der Sendeachse bis zu der Lichteintrittsseite 20 der Multifokuslinse 4 erstreckt. Entsprechend der Darstellung in Draufsicht gemäß Fig. 4b befindet sich diese Zone lediglich innerhalb einer Seitenhälfte der Multifokuslinse 4.

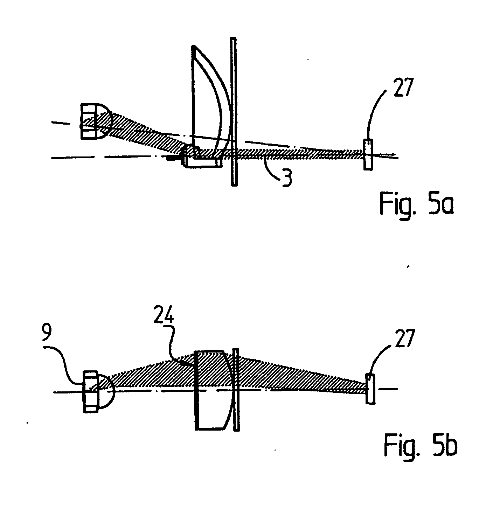

Dementsprechend geht aus den Figuren 5a und 5b hervor, daß das Reflexions- oder Remissionslicht eines in einem Überwachungs-Extremnahbereich befindlichen Objekts 27 mittels der sich von der Planfläche 24 bis zu der Lichteintrittsseite 20 der Multifokuslinse 4 erstreckenden Zone sowie mittels der Empfangssammellinse 7 auf das Empfangselement 9 abgebildet wird.

Aus den Figuren 3a bis 5b geht somit hervor, daß die Ausgestaltung der Multifokuslinse 4 mit verschiedenen Zonen mit unterschiedlichen, räumlich voneinander getrennten Brennpunkten auf einfache Weise eine vorteilhafte Erweiterung des Überwachungsbereichs entlang der Sendeachse 3 ermöglicht. Objekte 27 in verschiedenen Abschnitten des Überwachungsbereichs werden dabei nicht unbedingt ausschließlich mittels der jeweils entsprechenden, vorstehend als wirksam bezeichneten Zone auf das Empfangselement 9 abgebildet; im Übergangsbereich zwischen benachbarten derartigen Abschnitten des Überwachungsbereichs erfolgt die Abbildung des von einem Objekt 27 reflektierten Lichts auf das Empfangselement 9 des Sensor gegebenenfalls mittels der beiden den benachbarten Überwachungsbereich-Abschnitten entsprechenden Zonen. Die verschiedenen Überwachungsbereich-Abschnitte müssen nicht unbedingt geradlinig entlang der Sendeachse 3 angeordnet sein, sondern können auch seitlich versetzt zueinander sein.

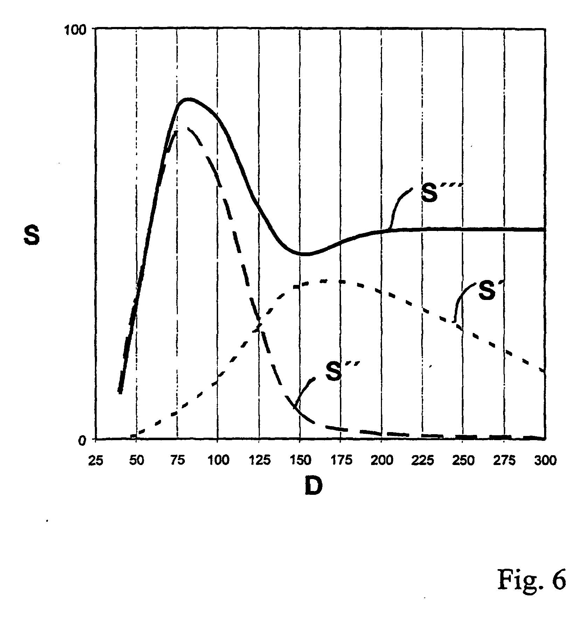

Fig. 6 zeigt beispielhaft und in willkürlichen Einheiten den Verlauf der Lichtmenge S, die an dem Empfangselement 9 des Sensors gemäß Fig. 1 erhalten wird und von der Reflexion oder Remission eines Objekts 27 in verschiedenen Abschnitten des Überwachungsbereichs stammt. Bei dem dargestellten Schaubild ist in horizontaler Richtung der Abstand D des Objekts 27 vom Sensor in der Einheit Millimeter eingezeichnet.

Der Verlauf der Lichtmenge S', die durch Abbildung des von dem Objekt 27 stammenden Lichts auf das Empfangselement 9 mittels der lediglich für den Überwachungs-Nahbereich wirksamen Zone erzeugt wird, ist kurz gestrichelt wiedergegeben. Die lang gestrichelte Kurve zeigt die Lichtmenge S", die allein von der für den Überwachungs-Extremnahbereich wirksamen Zone auf das Empfangselement 9 abgebildet wird. Die durchgezogene Linie gibt die Gesamtlichtmenge S"' wieder, die von allen drei Zonen der Multifokuslinse 4 auf das Empfangselement 9 abgebildet wird. Die Lichtmenge S"' ist also die Summe der Lichtmengen S', S" sowie der nicht einzeln dargestellten Lichtmenge, die ausschließlich von der dem Überwachungs-Fernbereich zugeordneten Zone auf das Empfangselement 9 abgebildet wird.

Wie aus Fig. 6 hervorgeht, wird auch für Objekte 27 im Überwachungs-Nahbereich bzw. -Extremnahbereich noch eine Lichtmenge ähnlich jener, welche für Objekte 27 im Überwachungs-Fernbereich am Empfangselement 9 erhalten wird, auf dieses abgebildet. Der Überwachungsbereich ist um den Nahbereichs-Abschnitt und den Extremnahbereichs-Abschnitt in Richtung des Sensors erweitert. Erst unmittelbar vor dem Sensor fällt das Signal mit verringertem Abstand D stark ab.

Die Ausgestaltung der Multifokuslinse 4 kann auf vorteilhaft einfache Weise optimiert sein. Wie insbesondere aus den Figuren 1 und 2b hervorgeht, besitzt die Lichteintrittsseite 20 der Multifokuslinse 4 eine allen Zonen gemeinsame asphärische Oberfläche, deren Krümmung für die Abbildung eines Objekts 27 innerhalb verschiedener Abschnitte des Überwachungsbereichs auf das Empfangselement 9 optimiert ist. Da es sich bei der Lichteintrittsseite 20 um die einzige gekrümmte Oberfläche der Multifokuslinse 4 handelt, ist deren Herstellung sehr einfach.

Allgemein ist es bevorzugt, wenn die Seite der Linse, deren Oberfläche eine gekrümmte Form aufweist, einen differenzierbaren Verlauf besitzt, insbesondere im Querschnitt entlang einer Ebene, innerhalb welcher der Sendestrahl verläuft. Somit erfolgt an der entsprechenden Seite der Multifokuslinse 4 keine abrupte Dickenveränderung der Multifokuslinse 4, sondern sie besitzt eine gleichmäßig glatte Oberfläche, wodurch sie weniger verschmutzungsanfällig ist.

Die Herstellung der Multifokuslinse 4 vereinfacht sich, wenn eine Zone der Multifokuslinse 4, die insbesondere der einen differenzierbaren Verlauf aufweisenden Seite gegenüberliegt, als Planfläche ausgebildet ist. Im Falle der Multifokuslinse 4 des Sensors gemäß Fig. 1 ist die Lichtaustrittsseite 21 aller Zonen jeweils als Planfläche 22, 23, 24 gestaltet. Alternativ hierzu kann die Lichtaustrittsseite zumindest einer Zone als gekrümmte, insbesondere asphärische oder sphärische Oberfläche ausgebildet sein, um eine weitere Optimierung der Abbildungseigenschaften dieser Zone zu ermöglichen.

Eine sehr einfache Möglichkeit zur Variierung der Abbildungseigenschaften zweier Zonen besteht darin, ihre insbesondere jeweils als Planfläche 22, 23, 24 ausgebildete Lichtaustrittsseite 21 bezüglich einer Richtung parallel zu der Sendeachse 3 räumlich versetzt zueinander anzuordnen.

Gemäß Fig. 1 verläuft die optische Achse der für die Abbildung eines Überwachungs-Fernbereichs auf das Empfangselement 9 vorgesehenen Zone auf der Lichtaustrittsseite 21 im wesentlichen parallel zu der Sendeachse 3.

Die Abbildung eines Überwachungs-Nahbereichs bzw. -Extremnahbereichs auf das Empfangselement 9 erfolgt bei dem Sensor gemäß Fig. 1 auf vorteilhaft einfache Weise, indem die optische Achse der entsprechenden Zonen 23 bzw. 24 der Multifokuslinse 4 auf der Lichtaustrittsseite 21 in einem von Null verschiedenen Winkel zur Sendeachse verlaufen.

Da die Öffnungsfläche der Lichteintrittsseite 20 der für die Abbildung des Überwachungs-Fernbereichs wirksamen Zone des Sensors gemäß Fig. 1 erheblich größer ist als die Lichteintrittsseiten 20 der für die Abbildung eines Überwachungs-Nahbereichs bzw. -Extremnahbereichs wirksamen Zonen der Multifokuslinse 4, werden diese Zonen jeweils in einem ähnlichen Raumwinkel von dem Licht beaufschlagt, welches von Objekten 27 in den verschiedenen Überwachungsbereich-Abschnitten reflektiert wird. Somit kann - wie aus Fig. 6 ersichtlich - näherungsweise unabhängig von dem Abstand des Objekts 27 von dem Sensor eine ausreichende Lichtmenge auf das Empfangselement 9 abgebildet werden, so daß dessen Empfindlichkeit an diese Lichtmenge angepaßt werden kann.

Schließlich sei bemerkt, daß bei einer alternativen Ausführungsform der Erfindung auch Planflächen auf der Lichteintrittsseite und zumindest eine gekrümmte Fläche auf der Lichtaustrittsseite vorgesehen werden können.

## Patentansprüche

1. Opto-elektronischer Sensor zur Überwachung eines Raumbereichs, insbesondere Reflexionslichttaster, mit einem Sender (1) zum Aussenden eines Sendelichtstrahls entlang einer Sendeachse (3), mit einer Empfangsoptik und mit einem Empfangselement (9),
**dadurch gekennzeichnet,**
**daß** die Empfangsoptik zur Vergrößerung des Überwachungsbereichs eine Multifokuslinse (4) mit mehreren Zonen unterschiedlicher Brennpunkte aufweist,
wobei diejenige Zone, die für die Abbildung eines Überwachungs-Nahbereichs auf das Empfangselement (9) wirksam ist, einen geringeren Abstand zu der Sendeachse (3) aufweist als diejenige Zone, die für die Abbildung eines Überwachungs-Fernbereichs auf das Empfangselement (9) wirksam ist, und
wobei die Multifokuslinse (4) asymmetrisch ist.

2. Opto-elektronischer Sensor nach Anspruch 1,
**dadurch gekennzeichnet,**
**daß** die Lichteintrittsseite (20) oder die Lichtaustrittsseite (21) der Multifokuslinse (4) im Querschnitt entlang einer Ebene, innerhalb welcher der Sende strahl verläuft, einen differenzierbaren Verlauf aufweist und/oder daß die Lichteintrittsseite (20) oder die Lichtaustrittsseite (21) der Multifokuslinse (4) eine allen Zonen gemeinsame asphärische Oberfläche aufweist.

3. Opto-elektronischer Sensor nach einem der vorstehenden Ansprüche, **dadurch gekennzeichnet, daß** die Lichteintrittsseite (20) oder die Lichtaustrittsseite (21) wenigstens einer, insbesondere jeder Zone der Multifokuslinse (4) als Planfläche (22, 23, 24) ausgebildet ist und/oder daß die Lichteintrittsseite (20) oder die Lichtaustrittsseite (21) wenigstens einer Zone der Multifokuslinse (4) als asphärische Oberfläche ausgebildet ist.

4. Opto-elektronischer Sensor nach einem der vorstehenden Ansprüche, **dadurch gekennzeichnet,**
**daß** die Lichteintrittsseiten oder die Lichtaustrittsseiten (23, 24) zweier Zonen der Multifokuslinse (4) bezüglich einer Richtung parallel zu der Sendeachse (3) räumlich versetzt zueinander angeordnet sind und/oder daß die optische Achse wenigstens einer Zone der Multifokuslinse (4), insbesondere einer für die Abbildung eines Überwachungs-Fernbereichs auf das Empfangselement (9) vorgesehenen Zone, auf der Lichtaustrittsseite (22) zumindest im wesentlichen parallel zu der Sendeachse (3) verläuft.

5. Opto-elektronischer Sensor nach einem der vorstehenden Ansprüche, **dadurch gekennzeichnet,**
**daß** die optische Achse wenigstens einer Zone der Multifokuslinse (4), insbesondere einer für die Abbildung eines Überwachungs-Nahbereichs auf das Empfangselement (9) vorgesehenen Zone, auf der Lichtaustrittsseite (23, 24) in einem von Null verschiedenen Winkel zur Sendeachse (3) verläuft und/oder daß die Multifokuslinse (4) einstückig ist und/oder aus einem einzigen, im wesentlichen homogenen Material ausgebildet ist und/oder einen homogenen Brechungsindex aufweist.

6. Opto-elektronischer Sensor nach einem der vorstehenden Ansprüche, **dadurch gekennzeichnet,**
**daß** die Zonen der Multifokuslinse (4) bezüglich ihrer jeweiligen Abbildungseigenschaften im wesentlichen deutlich voneinander abgegrenzt sind, oder daß die Multifokuslinse (4) als Verlaufslinse ausgebildet ist mit einem kontinuierlichen Übergang der Abbildungseigenschaften von einer Zone zur anderen Zone.

7. Opto-elektronischer Sensor nach einem der vorstehenden Ansprüche, **dadurch gekennzeichnet,**
**daß** die Empfangsoptik zusätzlich eine Empfangssammellinse (7) kurzer Brennweite aufweist, die unmittelbar vor dem Empfangselement (9) angeordnet ist und deren Öffnungsfläche größer ist als die lichtempfindliche Fläche des Empfangselements (9), wobei insbesondere die Öffnungsfläche der Empfangssammellinse (7) um einen Faktor 10 bis 100 größer ist als die lichtempfindliche Fläche des Empfangselements (9).

8. Opto-elektronischer Sensor nach Anspruch 7, **dadurch gekennzeichnet, daß** die Lichteintrittsseite der Empfangssammellinse (7) im wesentlichen halbkugelförmig ausgebildet ist.

9. Opto-elektronischer Sensor nach einem der vorstehenden Ansprüche, **gekennzeichnet durch** einen Pilotsender (10) zum Aussenden eines sichtbaren Pilotlichtstrahls (12) parallel zur Sendeachse (3) des Senders (1), insbesondere auch **durch** eine Pilotstrahllinse (11), die zwischen dem Pilotsender (10) und dem Überwachungsbereich angeordnet ist.

10. Opto-elektronischer Sensor nach einem der vorstehenden Ansprüche, **dadurch gekennzeichnet,**
**daß** er zur Bestimmung des Abstands eines Objekts innerhalb des Überwachungsbereichs vom Sensor eine Meßeinrichtung, insbesondere eine Lichtlaufzeit-Meßeinrichtung, aufweist.

## Claims

1. An optoelectronic sensor for the monitoring of a spatial region, in particular a reflected light sensor, with a transmitter (1) for the transmission of a transmitted light ray along a transmission axis (3), with an optical reception system and with a receiver element (9),
**characterised in that**
the optical reception system has a multifocal lens (4) with a plurality of zones of different focal points for the magnification of the monitored zone;
wherein that zone effective for the imaging of a monitored near zone onto the receiver element (9) has a smaller spacing from the transmission axis (3) than that zone effective for the imaging of a monitored far zone onto the receiver element (9); and
wherein the multifocal lens (4) is asymmetric.

2. An optoelectronic sensor in accordance with claim 1, **characterised in that** the light entry side (20) or the light exit side (21) of the multifocal lens (4) extends in cross-section along a plane within which the transmitted ray extends and has a course which can be distinguished; and/or **in that** the light entry side (20) or the light exit side (21) of the multifocal lens (4) has an aspheric surface common to all zones.

3. An optoelectronic sensor in accordance with any one of the preceding claims, **characterised in that** the light entry side (20) or the light exit side (21) of at least one zone, in particular of every zone, of the multifocal lens (4) is made as a planar surface (22, 23, 24); and/or **in that** the light entry side (20) or the light exit side (21) of at least one zone of the multifocal lens (4) is made as an aspheric surface.

4. An optoelectronic sensor in accordance with any one of the preceding claims, **characterised in that** the light entry sides or the light exit sides (23, 24) of two zones of the multifocal lens are arranged spatially offset with respect to one another with respect to a direction parallel to the transmission axis (3); and/or **in that** the optical axis of at least one zone of the multifocal lens (4), in particular of a zone provided for the imaging of a monitored far zone onto the receiver element (9), extends at least substantially parallel to the transmission axis (3) on the light exit side (22).

5. An optoelectronic sensor in accordance with any one of the preceding claims, **characterised in that** the optical axis of at least one zone of the multifocal lens (4), in particular of a zone provided for the imaging of a monitored near zone onto the receiver element (9), extends on the light exit side (23, 24) at an angle other than zero to the transmission axis (3); and/or **in that** the multifocal lens (4) is made in one piece and/or from a single, substantially homogeneous material and/or has a homogeneous refractive index.

6. An optoelectronic sensor in accordance with any one of the preceding claims, **characterised in that** the zones of the multifocal lens (4) are substantially clearly delineated from one another with respect to their respective imaging properties; or **in that** the multifocal lens (4) is made as a varifocal lens with a continuous transition of the imaging properties from one zone to the other zone.

7. An optoelectronic sensor in accordance with any one of the preceding claims, **characterised in that** the optical reception system additionally has a converging receiving lens (7) of short focal length which is arranged directly in front of the receiver element (9) and whose open surface is larger than the light-sensitive surface of the receiver element (9), with in particular the open surface of the converging receiving lens (7) being larger by a factor of 10 to 100 than the light-sensitive surface of the receiver element (9).

8. An optoelectronic sensor in accordance with claim 7, **characterised in that** the light entry side of the converging receiving lens (7) is made substantially semi-spherical.

9. An optoelectronic sensor in accordance with any one of the preceding claims, **characterised by** a pilot transmitter (10) for the transmission of a visible pilot light ray (12) parallel to the transmission axis (3) of the transmitter (1), in particular also by a pilot ray lens (11) which is arranged between the pilot transmitter (10) and the monitored zone.

10. An optoelectronic sensor in accordance with any one of the preceding claims, **characterised in that** it has a measuring device, in particular a light transit time measuring device, for the determination of the spacing of an object inside the monitored region from the sensor.

## Revendications

1. Capteur optoélectronique destiné à la surveillance d'une zone d'espace, notamment capteur de lumière réfléchie, comportant un émetteur (1) pour l'émission d'un faisceau lumineux émis le long d'un axe d'émission (3), une optique de réception et un élément récepteur (9),
**caractérisé en ce que**,
pour l'agrandissement de la zone de surveillance, l'optique de réception comporte une lentille multifocale (4) avec plusieurs zones de foyers différents,
la zone qui est efficace pour la représentation d'une zone de surveillance proche sur l'élément récepteur (9), étant située à un écartement plus faible de l'axe d'émission (3) que la zone qui est efficace pour la représentation d'une zone de surveillance éloignée sur l'élément récepteur (9), et
la lentille multifocale (4) étant asymétrique.

2. Capteur optoélectronique selon la revendication 1,
**caractérisé en ce que,**
en section transversale le long d'un plan, à l'intérieur duquel s'étend le faisceau émetteur, le côté d'entrée de lumière (20) ou le côté de sortie de lumière (21) de la lentille multifocale (4) présente une extension pouvant être différenciée, et/ou **en ce que** le côté d'entrée de lumière (20) ou le côté de sortie de lumière (21) de la lentille multifocale (4) comporte une surface non sphérique commune à toutes les zones.

3. Capteur optoélectronique selon l'une des revendications précédentes,
**caractérisé en ce que**
le côté d'entrée de lumière (20) ou le côté de sortie de lumière (21) d'une zone au moins, notamment de chaque zone de la lentille multifocale (4), est agencé sous la forme d'une surface plane (22, 23, 24), et/ou **en ce que** le côté d'entrée de lumière (20) ou le côté de sortie de lumière (21) d'une zone au moins de la lentille multifocale (4) est agencé sous la forme d'une surface non sphérique.

4. Capteur optoélectronique selon l'une quelconque des revendications précédentes,
**caractérisé en ce que,**
par rapport à une direction parallèle à l'axe d'émission (3), les côtés d'entrée de lumière ou les côtés de sortie de lumière (23, 24) de deux zones de la lentille multifocale (4) sont disposés en étant décalés dans l'espace les uns par rapport aux autres, et/ou **en ce que** l'axe optique d'une zone au moins de la lentille multifocale (4), notamment d'une zone prévue pour la représentation d'une zone de surveillance éloignée sur l'élément récepteur (9), s'étend du côté de sortie de lumière (22) au moins pour l'essentiel parallèlement à l'axe d'émission (3).

5. Capteur optoélectronique selon l'une quelconque des revendications précédentes,
**caractérisé en ce que**
l'axe optique d'une zone au moins de la lentille multifocale (4), notamment d'une zone prévue pour la représentation d'une zone de surveillance proche sur l'élément récepteur (9), s'étend du côté de sortie de lumière (23, 24) selon un angle différent de zéro par rapport à l'axe d'émission (3), et/ou **en ce que** la lentille multifocale (4) est réalisée d'un seul tenant et/ou est constituée d'un seul matériau sensiblement homogène et/ou présente un indice de réfraction homogène.

6. Capteur optoélectronique selon l'une quelconque des revendications précédentes,
**caractérisé en ce que**
les zones de la lentille multifocale (4) sont pour l'essentiel nettement délimitées les unes par rapport aux autres en ce qui concerne leurs propriétés respectives de représentation, ou **en ce que** la lentille multifocale (4) est agencée sous la forme d'une lentille progressive avec une transition continue des propriétés de représentation d'une zone vers l'autre zone.

7. Capteur optoélectronique selon l'une quelconque des revendications précédentes,
**caractérisé en ce que**
l'optique de réception comporte en plus une lentille de réception convexe (7) de courte focale, qui est disposée directement devant l'élément récepteur (9), et dont la surface d'ouverture est plus grande que la surface photosensible de l'élément récepteur (9), la surface d'ouverture de la lentille de réception convexe (7) étant notamment plus grande que la surface photosensible de l'élément récepteur (9) d'un facteur de 10 à 100.

8. Capteur optoélectronique selon la revendication 7,
**caractérisé en ce que**
le côté d'entrée de lumière de la lentille de réception convexe (7) est pour l'essentiel agencé avec une forme hémisphérique.

9. Capteur optoélectronique selon l'une des revendications précédentes, **caractérisé par** un émetteur pilote (10) pour l'émission d'un faisceau lumineux pilote visible (12) parallèlement à l'axe d'émission (3) de l'émetteur (1), notamment également par une lentille à faisceau pilote (11) qui est disposée entre l'émetteur pilote (10) et la zone de surveillance.

10. Capteur optoélectronique selon l'une quelconque des revendications précédentes,
**caractérisé en ce que**,
pour la détermination par le capteur de la distance d'un objet à l'intérieur de la zone de surveillance, celui-ci comporte un dispositif de mesure, notamment un dispositif de mesure de temps de propagation de la lumière.
